# FASCICULE DE BREVET EUROPEEN

(11) **EP 2 242 683 B1**
(45) Date de publication et mention de la délivrance du brevet: **20.04.2016**
(21) Numéro de dépôt: 09720526.4
(22) Date de dépôt: 19.02.2009
(51) Int. Cl.: B64C 1/06, B64C 9/02, B64C 9/00, B64C 25/16

(54) **PANNEAU COMPOSITE MONOLITHIQUE AUTO-RAIDI ET PIVOTANT, NOTAMMENT POUR UNE PARTIE MOBILE D'AERONEF**
MONOLOTHISCHE, SELBSTVERSTEIFENDE UND SCHWENKBARE VERBUNDPLATTE, INSBESONDERE FÜR EIN MOBILES FLUGZEUGBAUTEIL
MONOLITHIC, SELF-STIFFENED, AND PIVOTING COMPOSITE PANEL, IN PARTICULAR FOR A MOBILE PART OF AN AIRCRAFT

(30) Priorité: 20.02.2008 FR 0851087
(43) Date de publication de la demande: 27.10.2010
(73) Titulaire: Socata, 65290 Louey (FR)
(72) Inventeur: VALLEE, Philippe, F-65360 Saint Martin (FR)
(74) Mandataire: Ipside
(86) Numéro de dépôt international: PCT/FR2009/050270
(87) Numéro de publication internationale: WO 2009/112735

(56) Documents cités:
- WO-A-2007/062641
- US-A- 5 262 220
- US-A1- 2002 100 840

## Description

La présente invention se rapporte à un panneau composite monolithique auto-raidi, destiné à pivoter autour d'un axe de rotation, notamment pour constituer une partie mobile d'un aéronef, telle qu'une porte de trappe, en particulier de train d'atterrissage d'aéronef, ou un volet, aileron, élevon ou spoiler d'aéronef.

Pour réaliser certaines pièces pivotantes d'avion, notamment des portes de trappes ou d'autres ouvertures ménagées dans le fuselage, il est connu d'utiliser des panneaux monolithiques auto-raidis, en matériaux composites, réalisés en une résine rigidifiable, notamment thermostable, thermodurcissable ou thermoplastique, telle qu'une résine époxyde, renforcée par une armature en fibres organiques ou inorganiques, notamment minérales, telles que de carbone, par exemple en plis de nappes ou tissus de fibres pré-imprégnés de ladite résine, puis drapés et/ou empilés, ou encore par infusion de résine ou moulage par transfert de résine dans une préforme de fibres, selon les procédés dits LRI et RTM. Ces panneaux sont montés pivotants autour d'un axe de rotation parallèle à un côté du panneau, qui comporte un premier revêtement composite continu, dit externe, car tourné vers l'extérieur de l'avion lorsque le panneau est en position de fermeture de la trappe ou de l'ouverture correspondante, et constitue alors une partie de la peau externe de l'avion, et d'une armature structurale principale disposée sur la face interne du premier revêtement, et constituée de raidisseurs composites solidaires de ce premier revêtement, ainsi, parfois, que d'un second revêtement composite, pouvant être continu ou ajouré, disposé sur les raidisseurs et solidaire de ces derniers, et qui constitue ainsi un revêtement dit interne, car tourné vers l'intérieur de l'avion, dans la position de fermeture précitée.

En général, sur les panneaux monolithiques auto-raidis en matériau composite de l'état de la technique, l'armature structurale principale est constituée d'une pluralité de raidisseurs s'étendant parallèlement les uns aux autres sur le revêtement continu externe, les raidisseurs ayant une section transversale dite fermée, de type oméga, comme décrit par exemple dans FR 2 898 539. Lorsque ces panneaux de structure, plans ou présentant des courbures simples ou doubles, sont utilisés pour réaliser des pièces pivotantes autour d'un axe de rotation parallèle à un côté du panneau, dont la forme générale en plan est sensiblement polygonale, le plus souvent à au moins quatre côtés, les raidisseurs sont orientés dans une direction perpendiculaire à l'axe de rotation, afin de rechercher une rigidité en torsion suffisante du panneau.

Dans le cadre de la classification des pièces aéronautiques, ce type de panneau est généralement considéré comme une pièce de structure primaire conditionnant une conception garantissant le maintien du panneau, par exemple utilisé comme porte de trappe, sur l'aéronef en toutes conditions. Il en résulte que les composants du panneau doivent présenter des épaisseurs relativement importantes, d'où une masse et un coût de réalisation élevés.

Les mêmes inconvénients sont présentés par des panneaux auto-raidis en composite pré-imprégné, du type tel que décrit dans EP 1 537 982 dans lequel les raidisseurs parallèles sont en forme de U reliés par leur base à la face interne du revêtement externe, mais disposés côte à côte et solidarisés les uns aux autres par leurs ailes adjacentes au moyen de bandes composites rectangulaires d'interface, d'où un nombre élevé de raidisseurs, donc également une masse et un coût élevés.

WO 2007/009923 décrit également un panneau composite auto-raidi monolithique, pour une trappe de train d'atterrissage d'aéronef, comportant une première peau formant la paroi externe du panneau, une seconde peau formant une partie de la paroi interne du panneau, et formée en creux pour constituer un cadre de renfort interne réalisant une pluralité de raidisseurs à profil creux répartis sur le pourtour du panneau. Ces raidisseurs ont un profil de section creuse, par exemple en forme de oméga, et constituent essentiellement des raidisseurs périphériques, s'étendant, pour certains, dans la direction de l'axe de rotation du panneau, et, pour d'autres, perpendiculairement à cette direction, et accessoirement au moins un raidisseur transversal, qui s'étend également perpendiculairement à cette direction de l'axe de rotation.

US 2002/100840 décrit aussi un panneau composite auto-raide avec toutes les caractéristiques techniques du préambule de la revendication 1.

Un tel panneau présente sensiblement les mêmes inconvénients que ceux précédemment mentionnés, et en particulier une insuffisance de rigidité en torsion.

Le problème à la base de l'invention est de remédier aux inconvénients précités, et de proposer un panneau composite monolithique auto-raidi, tel que défini par les caracteristiques techniques de la revendication 1, destiné à pivoter autour d'un axe de rotation parallèle à un côté du panneau, dont la rigidité en torsion soit améliorée, afin de pouvoir optimiser les épaisseurs des divers composants constituant le panneau, et donc réduire la masse globale du panneau de manière conséquente, ainsi que son coût de fabrication. Plus généralement, le but de l'invention est de proposer un panneau composite monolithique auto-raidi du type présenté ci-dessus, qui convienne mieux que ceux de l'état de la technique aux diverses exigences de la pratique.

A cet effet, le panneau composite monolithique auto-raidi selon l'invention, du type comportant un premier revêtement composite, qui est continu, sur lequel est disposée une armature structurale principale constituée de raidisseurs composites solidaires du premier revêtement, se caractérise en ce que l'armature structurale principale comprend un treillis de raidisseurs comportant au moins une paire de raidisseurs disposés en croix, et orientés chacun dans l'une respectivement de deux directions qui ne sont ni parallèles, ni perpendiculaires audit axe de rotation, les deux parties de chaque raidisseur qui s'étendent de part et d'autre du noeud au centre de ladite croix étant en continuité structurale l'une avec l'autre, les deux raidisseurs ayant chacun une extrémité située en un point sur ledit côté du panneau qui est parallèle à l'axe de rotation, et où ladite extrémité est solidaire d'un organe rigide de liaison à l'axe de rotation, l'extrémité opposée d'au moins un des raidisseurs étant arrêtée en rotation sur un point d'appui sur un côté opposé du panneau.

Ainsi, le panneau de l'invention peut être maintenu sur une ligne d'articulation, qui est l'axe de rotation, et arrêté en rotation sur ledit point d'appui, situé à l'opposé de la ligne d'articulation, et qui peut être constitué d'un verrou ou d'une butée, telle que butée de porte, sur la structure environnante, ou encore sur l'extrémité d'un actionneur de manoeuvre commandant les pivotements du panneau. On comprend que les raidisseurs de la ou des croix d'un tel panneau relient les points durs interfaçant le panneau avec la structure environnante sur laquelle le panneau est monté pivotant, ces points durs correspondant aux points d'articulation (organes rigides de liaison à l'axe de rotation) et au point d'appui (verrou ou butée ou actionneur).

L'architecture du panneau selon l'invention, basée sur un treillis de raidisseurs constituant l'essentiel de l'armature structurale principale du panneau, permet, d'une part, de soumettre tous les raidisseurs à des charges essentiellement de flexion, de sorte qu'ils ne travaillent pas ou peu en torsion, et, d'autre part, de considérer les portions du premier revêtement qui sont délimitées entre les raidisseurs de l'armature structurale principale comme pouvant être éventuellement justifiés sans critère de tolérances aux dommages, et donc comme pouvant être dimensionnées en tant que telles, ce qui permet un gain de masse, alors que les raidisseurs ne travaillant plus en torsion ne doivent plus nécessairement avoir une section fermée, de type oméga, d'où également des gains de masse et de coût significatifs.

Avantageusement, le panneau comprend de plus des raidisseurs composites périphériques, installés le long des bords du panneau et solidaires du premier revêtement et d'extrémités de raidisseurs en croix, ce qui réalise un cadre améliorant encore la rigidité du panneau, du fait qu'il entoure le treillis de raidisseurs et est solidaire des extrémités des raidisseurs de ce treillis.

Lorsque le treillis comporte au moins deux croix, le panneau de l'invention peut comprendre avantageusement de plus au moins un raidisseur composite transversal, solidaire du premier revêtement, et disposé entre deux croix de raidisseurs, chacune des deux extrémités du raidisseur transversal étant solidaire d'extrémités de deux raidisseurs appartenant chacun à l'une respectivement des deux croix voisines, d'une part sur ledit côté du panneau qui est parallèle à l'axe de rotation, et d'autre part sur un côté opposé. En effet, un tel raidisseur transversal participe également à l'amélioration de la rigidité du panneau.

Avantageusement encore, le panneau de l'invention peut comprendre de plus un second revêtement composite, rapporté sur les raidisseurs et solidaire de ces derniers, de sorte que les raidisseurs sont emprisonnés entre les deux revêtements, ce qui assure la cohésion de l'ensemble du panneau ainsi constitué en assurant une continuité structurale entre raidisseurs dans les zones de noeud, au centre des croix et aux jonctions des raidisseurs des croix avec des raidisseurs périphériques et/ou transversaux.

Dans le même but, et pour procurer le même avantage, la continuité structurale des raidisseurs dans au moins une desdites zones de noeud, au centre d'au moins une, mais de préférence de chaque croix et/ou à au moins une jonction, mais de préférence à toutes les jonctions avec des raidisseurs périphériques et/ou transversaux le cas échéant, peut être assurée par au moins un renfort local, de type gousset ou éclisse, en composite ou métallique, plaqué et solidarisé sur ladite zone de noeud.

Pour assurer une bonne liaison du panneau de l'invention à une structure environnante, des ferrures de maintien du panneau sur une telle structure, au niveau de points d'articulation, butée de porte ou verrou notamment, sont avantageusement accostées sur le panneau par des fixations, de type rivetage ou boulonnage, auxquelles un accès est permis au travers d'ouvertures du second revêtement le cas échéant, dans le cas où ce dernier est ajouré, pour faciliter les inspections de maintenance et améliorer les réparations éventuellement nécessaires (dépose puis repose des ferrures notamment).

Une autre conséquence avantageuse de l'architecture du panneau de l'invention est que les raidisseurs peuvent être du type à section ouverte, et choisis de préférence parmi les raidisseurs ayant des sections profilées en T, I, C, Z ou U.

A titre d'applications particulièrement avantageuses, et pour lesquelles le panneau de l'invention présente un intérêt particulier pour le Demandeur, le panneau peut constituer une porte de trappe, notamment de train d'atterrissage d'aéronef, dont le premier revêtement est une peau externe et le second revêtement est une peau interne et ajourée, ou encore le panneau de l'invention peut constituer un volet, aileron, élevon ou spoiler d'aéronef, dont le premier revêtement est une peau d'intrados, et le second revêtement est une peau continue d'extrados.

Mais, bien entendu, le panneau de l'invention n'est pas limité à ces applications, et peut être utilisé pour réaliser d'autres éléments tels que caissons de fuselage et éléments de voilure d'un aéronef, en particulier du fait qu'il peut être plan ou bombé, dans une ou plusieurs directions, et que le ou les revêtement(s) et les raidisseurs sont réalisés en matériaux composites de type bien connu, en une résine rigidifiable, en particulier thermostable, thermodurcissable, telle qu'une résine époxyde, ou thermoplastique, renforcée d'une armature de fibres, organiques ou inorganiques, en particulier minérales, telles que de carbone, par la mise en oeuvre de l'un ou l'autre des divers procédés connus à cet effet.

D'autres avantages et caractéristiques de l'invention ressortiront de la description donnée ci-dessous, à titre non limitatif, d'exemples de réalisation décrits en référence aux dessins annexés sur lesquels :
- la figure 1 est une vue en perspective éclatée avec arrachement partiel d'un panneau selon l'invention, plan et rectangulaire, utilisable pour la réalisation d'une porte de trappe de train d'atterrissage d'avion ;
- la figure 2 est une vue schématique partielle en coupe transversale du panneau de la figure 1, au niveau d'un raidisseur en croix ;
- la figure 3 est une vue partielle en perspective d'une variante du panneau de la figure 1 ;
- la figure 4 est également une vue partielle en perspective d'une ferrure d'articulation en col de cygne montée sur une zone de jonction d'un raidisseur du treillis en croix avec un raidisseur périphérique d'une variante des panneaux selon les figures 1 et 3 ;
- la figure 5 est une vue schématique en coupe transversale selon V-V de la figure 4 ;
- la figure 6 est un schéma de l'architecture d'un panneau pivotant selon l'invention, utilisable comme porte de trappe de train d'atterrissage d'avion ; et
- la figure 7 est une vue analogue à la figure 6 d'un panneau pentagonal utilisable comme aileron, élevon ou spoiler d'avion.

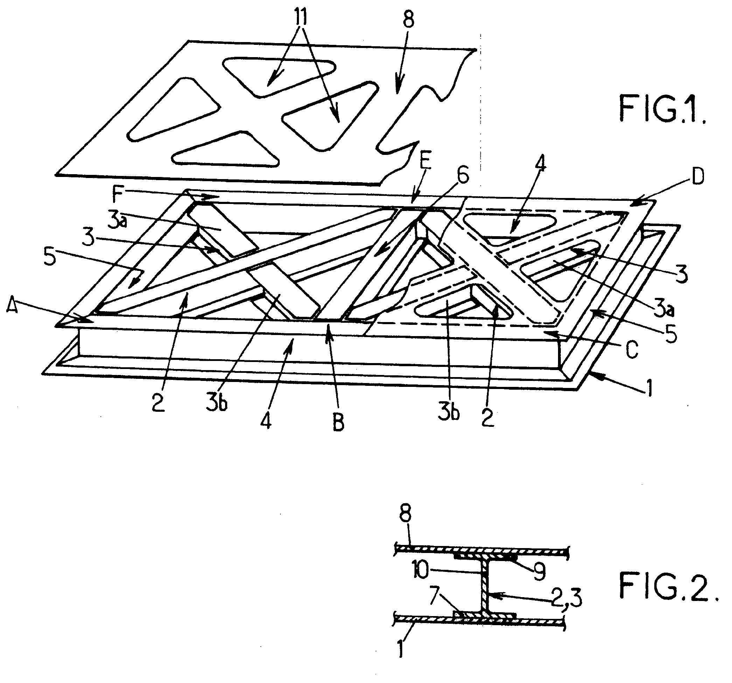

Le panneau composite monolithique auto-raidi des figures 1 et 2 est plan et rectangulaire, et destiné à pivoter autour d'un axe de rotation, non représenté, qui est parallèle au grand côté du panneau situé en position inférieure sur la figure 1, et à proximité et le long de ce grand côté.

Le panneau comprend un revêtement 1 continu et composite, dit externe car situé du côté de l'extérieur de l'aéronef, en position de fermeture de la trappe considérée par le panneau, ce revêtement externe 1 étant constitué d'un empilement de quelques plis formés de tissus ou nappes de fibres de carbone pré-imprégnées d'une résine appropriée, par exemple une résine époxyde.

Sur la face interne du panneau continu externe 1 est disposée une armature structurale principale comprenant un treillis de deux paires de raidisseurs 2 et 3 disposés en croix pour chaque paire. Ces raidisseurs 2 et 3 sont rectilignes, de section transversale en I et composites, et également constitués d'empilements et/ou drapage de plis formés de tissus ou nappes de fibres de carbone pré-imprégnées d'une résine appropriée, de préférence la même que celle constituant la matrice du revêtement composite externe 1. Pour chacune des deux croix de l'armature structurale en treillis, les raidisseurs 2 et 3 sont orientés chacun dans l'une respectivement de deux directions qui ne sont ni parallèles ni perpendiculaires à l'axe de rotation, c'est-à-dire ni parallèles ni perpendiculaires au grand comme au petit côté du revêtement externe rectangulaire 1. Dans l'exemple de la figure 1, les raidisseurs 2 et 3 sont inclinés chacun sensiblement à 45° sur les directions des grands et petits côtés du revêtement rectangulaire 1.

L'armature structurale principale comprend également quatre raidisseurs périphériques, dont deux longs 4 et deux courts 5, qui s'étendent respectivement le long des deux grands et des deux petits côtés du revêtement externe rectangulaire 1. Ces raidisseurs périphériques 4 et 5 sont de la même section ouverte en I et de la même structure composite que les raidisseurs 2 et 3 en croix. Les raidisseurs périphériques 4 et 5 constituent ainsi un cadre rectangulaire de bordure du panneau, et sont solidarisés les uns aux autres ainsi qu'aux extrémités des raidisseurs en croix 2 et 3 au niveau des quatre coins du cadre de bordure. L'armature structurale comprend encore un raidisseur transversal 6, qui est également de la même section ouverte en I et de la même structure composite que les raidisseurs en croix 2 et 3, et qui s'étend de l'un à l'autre des deux longs raidisseurs périphériques 4, parallèlement aux raidisseurs périphériques courts 5, entre les deux croix formées par les raidisseurs 2 et 3 dans le cadre de bordure du panneau. Les extrémités de ce raidisseur transversal 6 sont solidaires à la fois des longs raidisseurs périphériques 4, des extrémités des raidisseurs en croix 2 et 3 qui sont opposées à celles solidarisées dans les coins du cadre, et au revêtement externe 1, dont ainsi tous les raidisseurs 2, 3, 4, 5 et 6 de l'armature structurale sont solidaires sur toute la surface inférieure de la base 7 de leur profil en I (voir figure 2).

Le panneau est complété par un second revêtement rectangulaire plat et composite 8, de même dimension que le revêtement externe 1, et dit interne, car tourné vers l'intérieur de l'aéronef lorsque le panneau, utilisé comme porte de trappe de train d'atterrissage, est en position de fermeture de la trappe. Ce revêtement interne 8, sensiblement de même structure composite que le revêtement externe 1, est rapporté sur tous les raidisseurs 2, 3, 4, 5 et 6 de l'armature structurale et solidarisé par sa face externe contre toute la surface interne des ailes supérieures 9 du profil en I des raidisseurs (voir figure 2).

Ainsi, tous les raidisseurs 2, 3, 4, 5 et 6 sont emprisonnés entre les deux revêtements 1 et 8, ce qui assure la cohésion de l'ensemble du panneau ainsi constitué, avec une continuité structurale assurée entre les deux parties telles que 3a et 3b de chaque raidisseur en croix tel que 3 qui s'étendent de part et d'autre du noeud au centre de chaque croix, et dans les zones de liaison des extrémités des raidisseurs en croix 2 et 3 avec des extrémités des raidisseurs périphériques 4 et 5 (en A, C, D et F) ou avec les extrémités du raidisseur transversal 6 et les longs raidisseurs périphériques 4 (en B et E), grâce à la solidarisation à ces raidisseurs des deux revêtements externe 1 et interne 8.

Le panneau ainsi réalisé est donc monolithique et auto-raidi, et présente une excellente rigidité en torsion, ce qui permet d'optimiser les épaisseurs des revêtements 1 et 8, ainsi que de la base 7, de l'aile supérieure 9 et de l'âme 10 de chacun des neuf raidisseurs utilisés, afin de réduire la masse globale d'une manière conséquente.

Cette masse peut encore être réduite en ménageant des ajours 11 dans le revêtement interne 8, dans les zones de ce revêtement 8 qui ne sont pas à l'aplomb des raidisseurs périphériques 4 et 5, en croix 2 et 3 et transversal 6, de sorte que ces ajours 11 peuvent présenter la forme d'un triangle à sommets arrondis visible sur la figure 1, les zones entre des ajours voisins et les zones de bordure du revêtement interne 8 étant d'une largeur telle que les ailes 9 supérieures de tous les raidisseurs sont totalement recouvertes et cachées par le revêtement interne 8.

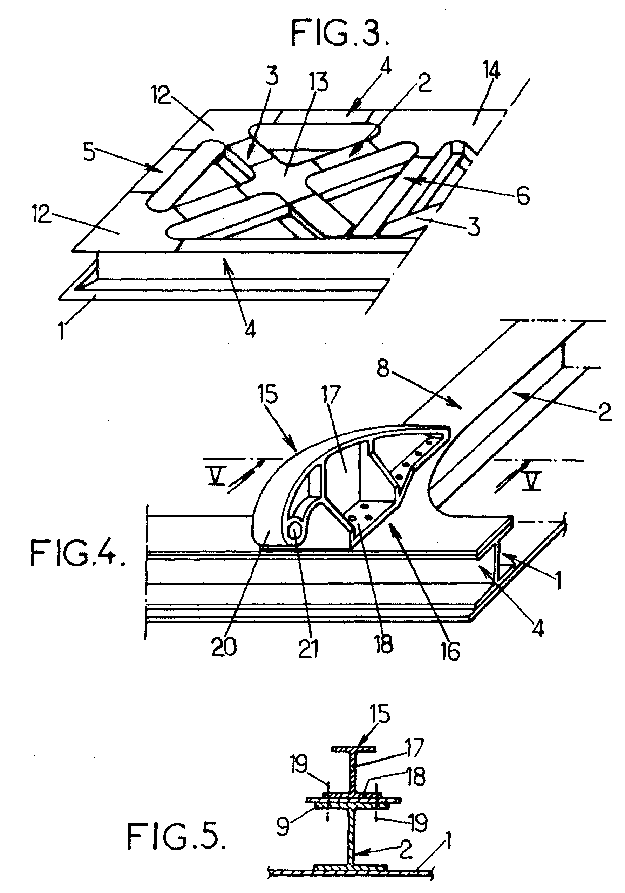

Pour son utilisation comme porte de trappe de train d'atterrissage, le panneau peut être équipé d'au moins deux, mais de préférence de trois ferrures d'articulation à pivotement autour de l'axe de rotation, non représentées sur la figure 1, mais par exemple telles que celle représentée sur la figure 4 et décrite ci-dessous. Chacune de ces trois ferrures d'articulation est fixée sur l'un respectivement de trois points durs assurant l'interface de la porte de trappe avec la structure environnante sur laquelle cette porte est montée, ces trois points durs correspondant aux deux zones de noeud A et C où l'extrémité des raidisseurs 2 du côté de l'axe de rotation est solidaire, dans un coin du cadre de bordure, d'une extrémité du raidisseur périphérique 4, du côté de l'axe de rotation et d'une extrémité de l'un respectivement des deux raidisseurs périphériques 5, tandis que le troisième point dur recevant une ferrure d'articulation correspond à la zone de noeud B où les extrémités des deux raidisseurs 3 du côté de l'axe de rotation sont solidaires à la fois d'une extrémité du raidisseur transversal 6 et du long raidisseur périphérique 4 du côté de l'axe de rotation.

Un quatrième point dur, correspondant à la zone de noeud E, où l'extrémité opposée du raidisseur transversal 6 est solidaire des extrémités des raidisseurs 2 et de l'autre long raidisseur périphérique 4, ou à la zone de noeud D, dans un coin du cadre où une extrémité d'un raidisseur 3 est solidaire du même autre long raidisseur périphérique 4, est ainsi formé sur le côté du panneau qui est opposé à celui à proximité de l'axe de rotation, pour recevoir une ferrure ou butée (également non représentée) de verrouillage de la porte en position fermée sur la structure environnante, ce quatrième point dur (D ou E) pouvant également être un point d'accrochage de l'extrémité de la tige d'un vérin de manoeuvre et de contreventement de la porte de la trappe.

Ainsi, la porte constituée par le panneau est maintenue sur une ligne d'articulation qui correspond à l'axe de rotation, et se trouve arrêtée en rotation sur un point situé sur un côté du panneau qui est opposé à celui longeant l'axe de rotation.

La variante de panneau représentée partiellement sur la figure 3 est représentée sans revêtement interne tel que 8, et comprend, pour le reste, les mêmes composants que le panneau des figures 1 et 2, à savoir essentiellement un revêtement externe 1, deux paires de raidisseurs en croix 2 et 3, quatre raidisseurs périphériques dont deux longs 4 et deux courts 5, et un raidisseur transversal 6.

Cette variante de la figure 3 se distingue essentiellement de la réalisation des figures 1 et 2 par le fait que la continuité structurale des raidisseurs 2, 3, 4, 5 et 6 dans les zones de noeud, au centre des croix et à la jonction des raidisseurs des croix 2 et 3 avec les raidisseurs périphériques 4 et 5 et le raidisseur transversal 6, est assurée par des renforts locaux 12 en forme de coins à trois branches, 13 en forme de croix, et 14 en forme de nappe à cinq branches, se positionnant respectivement sur un coin du cadre de bordure et une extrémité du raidisseur 2 ou 3 se rattachant à ce coin, sur un centre d'une croix formée par deux raidisseurs 2 et 3, et sur la zone du milieu d'un raidisseur périphérique long 4 où se rattachent une extrémité du raidisseur transversal 6 et les extrémités correspondantes des raidisseurs 2 ou 3. Ces renforts locaux 12, 13 et 14 peuvent être des goussets ou des éclisses métalliques plaqués et solidaires sur les parties correspondantes des raidisseurs, mais, de préférence, ces renforts 12, 13 et 14 sont des goussets ou éclisses composites, également constitués par superposition de quelques nappes de fibres de carbone pré-imprégnées de résine époxyde (ou d'autres résines thermostables, thermodurcissables ou thermoplastiques), l'ensemble ainsi constitué pouvant être ou non recouvert d'un revêtement interne ajouré tel que 8 des figures 1 et 2.

Les ferrures qui maintiennent le panneau sur la structure environnante, telles que des ferrures d'articulation aux trois points d'articulation A, B, C présentés ci-dessus (ou au moins aux deux points A et C si deux ferrures d'articulation seulement sont utilisées pour la liaison à l'axe de rotation) le long d'un long raidisseur périphérique 4 du panneau des figures 1 et 2, ou la ferrure de butée de porte ou de verrou équipant un point dur (D ou E) sur le côté opposé du panneau, sont des ferrures qui sont accostées sur le panneau constituant une structure rigide monobloc par des fixations par boulonnage ou rivetage, comme représenté schématiquement, pour une ferrure d'articulation, sur la figure 4.

Sur cette figure 4, la ferrure d'articulation 15 est fixée sur une zone de noeud 16 correspondant à la jonction d'un raidisseur 2 d'une croix avec un long raidisseur périphérique 4, tous deux solidarisés sur la face interne du revêtement externe 1. Dans cette zone de noeud 16, la jonction des deux raidisseurs 2 et 4 est également recouverte par une partie d'un revêtement interne 8 ajouré, les sections en I des raidisseurs 2 et 4 ainsi que leur structure composite et celle des revêtements 1 et 8 étant essentiellement identiques à celles des composants analogues dans les exemples de panneaux décrits ci-dessus. La ferrure d'articulation 15 comporte une embase 17 de section transversale également en forme de I (voir figures 4 et 5), qui est fixée par sa base 18 sur la zone de noeud 16 par des boulonnages ou rivetages schématiquement représentés en 19 sur la figure 5 par leur axe de fixation, et qui fixent la base 18 de la ferrure 15 à l'aile supérieure telle que 9 du raidisseur 2 et du raidisseur 4, au travers d'une partie du revêtement interne 8. L'embase 17 de la ferrure 15 se prolonge, en saillie au-delà du bord latéral externe du raidisseur périphérique 4 et, éventuellement même, du revêtement externe 1, par un col 20 traversé par un alésage cylindrique 21 destiné à recevoir l'axe de rotation, éventuellement sous la forme d'un gond s'engageant dans la paumelle constituée par le col 20, dont l'alésage 21 est coaxial avec celui des autres ferrures 15 identiques ou analogues fixés sur le panneau aux autres points durs de pivotement.

On constate que l'accès aux fixations 19 est permis au travers des ouvertures ou ajours ménagés dans le revêtement interne 8, ces ouvertures ou ajours facilitant de plus les inspections de maintenance et améliorant également la réparabilité de la porte par la dépose et la repose des ferrures 15 notamment.

L'architecture présentée ci-dessus du panneau composite monolithique auto-raidi selon l'invention, basée sur un treillis de raidisseurs 2, 3, complété par des raidisseurs 4, 5 et 6, que comprend l'armature structurale principale du panneau permet de considérer que les portions du revêtement externe 1 qui ne sont pas directement recouvertes par tous les raidisseurs précités pourraient être des éléments de structure secondaire, selon la Classification des pièces aéronautiques, et qui peuvent donc être endommagés, voire perdus, sans affecter l'intégrité structurale du treillis principal de raidisseurs 2 et 3, et donc sans mettre en péril la sécurité du vol de l'aéronef.

De ce fait, ces portions de revêtement externe 1 délimitées entre les raidisseurs 2, 3, 4, 5 et 6 de l'armature structurale principale, pourraient être considérées comme étant de classe structurale secondaire, et donc être dimensionnées en tant que telles, ce qui permettrait un gain de masse supplémentaire.

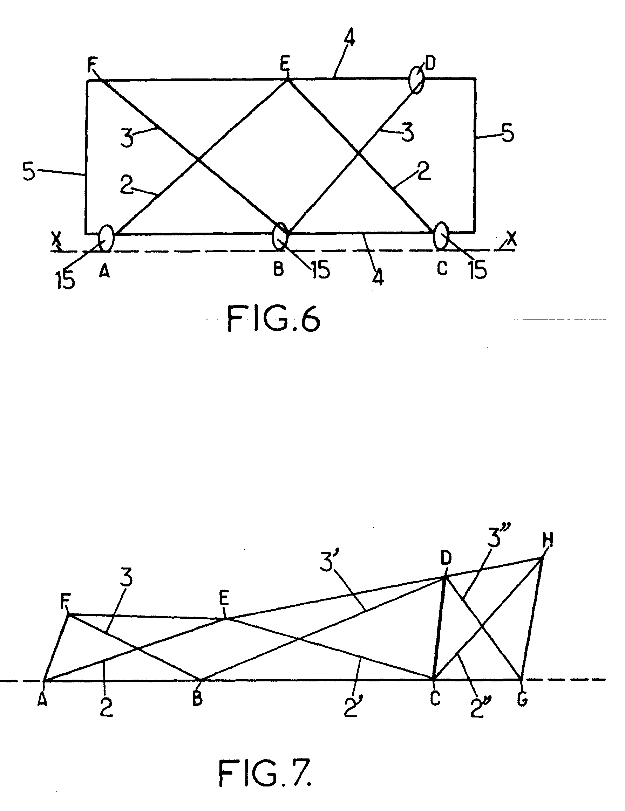

L'idée à la base de l'architecture du panneau de l'invention peut être expliquée à l'aide de la figure 6, qui représente très schématiquement en plan un panneau tel que celui des figures 1 et 2, sauf qu'il ne comporte pas de raidisseur transversal 6, la représentation de ce panneau étant limitée à celle de son armature structurale principale comportant un treillis de raidisseurs en deux croix, comme celui du panneau de la figure 1, de sorte que les mêmes références numériques sont utilisées sur la figure 6 pour désigner les composants analogues sur la figure 1, les deux revêtements 1 et 8 n'étant pas représentés.

Sur la figure 6, l'axe X-X représente l'axe de rotation parallèle à un long raidisseur périphérique 4 et proche de ce dernier, qui constitue un cadre rectangulaire avec les deux raidisseurs périphériques courts 5 et l'autre raidisseur périphérique long 4, le treillis d'armature comprenant deux croix dont chacune est constituée d'un raidisseur 2 croisé avec un raidisseur 3.

Comme sur la figure 1, les points durs où sont fixés des organes rigides d'articulation, tels que des ferrures en col de cygne 15, sont repérés aux points A, B et C, où les raidisseurs en croix 2 et 3 sont solidarisés par leurs extrémités au raidisseur périphérique 4 du côté de l'axe de rotation X-X, tandis que les points D, E et F, dont l'un supporte une ferrure ou butée de verrou ou blocage de porte, représentent les points durs auxquels les extrémités des raidisseurs en croix 2 et 3 sont solidarisées à l'autre raidisseur périphérique long 4, et, accessoirement, à un raidisseur périphérique court 5, pour les points D et F ainsi que A et C, et à un raidisseur transversal tel que 6 sur la figure 1 pour les points B et E.

L'idée à la base de l'invention consiste à positionner un raidisseur tel que 3 ou deux raidisseurs tels que 2 à partir d'un point dur sur le côté opposé à l'axe X-X, et correspondant à la position d'un verrou ou d'une butée de porte, donc à partir du point D ou du point E respectivement, ce raidisseur 3 ou ces raidisseurs 2 s'étendant jusqu'à un point B ou des points A et C sur le bord du panneau du côté de l'articulation X-X sans que ce point B ou respectivement ces points A et C ne se trouve(nt) sur une perpendiculaire à l'axe de rotation X-X passant par le point D ou respectivement le point E.

Ensuite, un ou plusieurs raidisseurs 2 ou 3 sont mis en appui respectivement sur les raidisseurs 3 ou 2 en partant des points d'articulation tels que B et C pour maintenir les coins opposés et restants du panneau.

Une telle configuration permet le maintien des raidisseurs 4 et 5 de bordure ainsi que les butées, ou guides, nécessaires au bon positionnement de la porte par rapport à la structure environnante.

Tous les raidisseurs sont ainsi soumis à des charges de flexion, et ne travaillent plus en torsion. Il n'est donc plus nécessaire d'utiliser des raidisseurs ayant une section fermée de type oméga. Les raidisseurs peuvent être fabriqués avec une section ouverte qui n'est pas limitée à une forme en I, mais peut être de type en T, C, Z ou d'autres formes encore.

A titre d'exemple, si le verrou de la porte est positionné au point D de la figure 6, le raidisseur 3 entre B et D supporte le raidisseur 2 entre C et E, tandis que le raidisseur 2 entre E et A supporte le raidisseur 3 entre B et F.

Par contre, si le verrou de porte est placé au point E, le raidisseur 2 entre A et E supporte le raidisseur 3 entre B et F, et le raidisseur 2 entre E et C supporte l'autre raidisseur 3 entre D et B.

Ce principe d'équilibre de la porte peut être appliqué à d'autres pièces mobiles en pivotement d'un avion, et dont la structure peut être celle d'un panneau composite monolithique auto-raidi, comme un aileron, un élevon ou un spoiler.

Dans ce cas, une telle pièce pivotante peut avoir la forme schématique en plan de la figure 7, c'est-à-dire celle d'un pentagone allongé avec un grand côté rectiligne AG, horizontal sur la figure 7, aux extrémités A et G duquel se raccordent deux petits côtés AF et GH, de longueur et d'inclinaison différentes sur AG, et dont les extrémités F, H sont reliées par deux côtés FE et EH opposés à AG, de longueur inégale et inclinés l'un sur l'autre, l'un d'eux FE, le plus petit à gauche sur la figure 7, étant sensiblement parallèle à AG et de longueur voisine de celle de AB. Ce pentagone peut être défini par les bords de deux revêtements tels que 1 et 8 sur la figure 1, mais tous deux continus, dont l'un constitue une peau d'intrados et l'autre une peau d'extrados de l'élément de voilure ainsi réalisé (aileron, élevon ou spoiler). Ce pentagone peut également être défini par un cadre réalisé avec cinq raidisseurs périphériques et sous-tendu par un treillis d'armature à trois croix constituées chacune par une paire de raidisseurs en croix 2, 3 ou 2', 3' ou 2", 3", dont les longueurs et les inclinaisons sont variables, et qui, pour chaque croix, s'étendent dans l'une respectivement de deux directions qui ne sont ni perpendiculaires ni parallèles à l'axe d'articulation, parallèle, dans cet exemple, à AG, ou confondu avec AG.

Comme le montre la figure 7, les raidisseurs en croix (2, 3), (2', 3'), (2", 3") peuvent être positionnés sur tout type de surface, à partir du moment où au moins une section quelconque, telle par exemple que la section CD est bloquée ou arrêtée en rotation, par un vérin, une butée ou un verrou, ou de toute autre manière. Les angles des croix formées par les raidisseurs sont définis par la géométrie du panneau, et peuvent être irréguliers. La ligne d'articulation correspondant au segment AG peut être constituée par une ligne d'accrochage continue ou par plusieurs points d'accrochage tels que A, B, C et G, quel que soit leur nombre. En outre, le panneau n'est pas nécessairement plan, et peut avoir des formes complexes diverses. En particulier, lorsque le panneau est un aileron, un élevon ou un spoiler, il peut présenter un profil aérodynamique cambré ou biconvexe, symétrique ou dissymétrique, ainsi éventuellement qu'une loi de vrillage selon l'envergure, c'est-à-dire selon la longueur du panneau. Dans ces applications, les deux revêtements composites de la pièce mobile sont des peaux continues, l'une d'intrados et l'autre d'extrados.

## Revendications

1. Panneau composite monolithique auto-raidi destiné à pivoter autour d'un axe de rotation (XX) parallèle à un côté du panneau, notamment pour une partie mobile d'aéronef, comportant un premier revêtement composite qui est continu sur lequel est disposée une armature structurale principale (2, 3, 4, 5, 6) solidaire du premier revêtement (1) et d'organes rigides (15) de liaison à l'axe de rotation (XX) **caractérisé en ce que** l'armature principale comprend un treillis de raidisseurs composites (2,3) comportant au moins une paire de raidisseurs (2, 3) disposés en croix, et orientés chacun dans l'une respectivement de deux directions qui ne sont ni parallèles ni perpendiculaires audit axe de rotation (XX), les deux parties (3a, 3b) de chaque raidisseur qui s'étendent de part et d'autre du noeud au centre de la dite croix étant en continuité structurale l'une avec l'autre, les deux raidisseurs ayant chacun une extrémités située en un point (A, B, C) sur ledit côté du panneau qui est parallèle à l'axe de rotation (XX) et où ladite extrémité est solidaire d'un organe rigide (15) de liaison à l'axe de rotation (XX), l'extrémité opposée d'au moins un des raidisseurs (2, 3) étant arrêtée en rotation sur un point d'appui (E, D) sur un côté opposé du panneau, et qu'il comporte des raidisseurs composites périphériques (4, 5) installés le long des bords du panneau et solidaires du premier revêtement (1) et d'extrémités de raidisseurs en croix (2, 3).

2. Panneau la revendication 1, **caractérisé en ce qu'**il comprend au moins un raidisseur composite transversal (6), solidaire du premier revêtement (1), et disposé entre deux croix de raidisseurs (2, 3), chacune des deux extrémités du raidisseur transversal (6) étant solidaire d'extrémités de deux raidisseurs (2, 3) appartenant chacun à l'une respectivement de deux croix voisines, d'une part sur ledit côté du panneau qui est parallèle à l'axe de rotation (X, X), et d'autre part sur un côté opposé.

3. Panneau selon l'une des revendications 1 et 2, **caractérisé en ce qu'**il comprend de plus un second revêtement composite (8), rapporté sur les raidisseurs (2, 3, 4, 5, 6) et solidaire de ces derniers, de sorte que les raidisseurs sont emprisonnés entre les deux revêtements (1, 8) .

4. Panneau selon l'une quelconque des revendications 1 à 3, **caractérisé en ce que** la continuité structurale des raidisseurs (2, 3) dans au moins une zone de noeud, au centre d'au moins une croix et/ou à au moins une jonction avec des raidisseurs périphériques (4, 5) et/ou transversaux le cas échéant, est assurée par au moins un renfort local, de type gousset ou éclisse, en composite ou métallique, plaqué et solidarisé sur ladite zone de noeud.

5. Panneau selon l'une quelconque des revendications 1 à 4, **caractérisé en ce que** des ferrures (15) de maintien du panneau sur une structure environnante, au niveau de points d'articulation (A, B, C), butée de porte ou verrou (D ou E) notamment, sont accostées sur le panneau par des fixations (19), de type rivetage ou boulonnage, auxquelles un accès est permis au travers d'ouvertures (11) du second revêtement (8) le cas échéant, dans le cas où ce dernier est ajouré.

6. Panneau selon l'une quelconque des revendications 1 à 5, **caractérisé en ce que** les raidisseurs (2, 3) sont du type à section ouverte, et choisis de préférence parmi les raidisseurs ayant des sections profilées en T, I, C, Z ou U.

7. Panneau selon l'une quelconque des revendications 1 à 6, **caractérisé en ce qu'**il constitue une porte de trappe, notamment de train d'atterrissage d'aéronef, dont le premier revêtement (1) est une peau externe et le second revêtement (8) est une peau interne et ajourée (11).

8. Panneau selon l'une quelconque des revendications 1 à 6, **caractérisé en ce qu'**il constitue un volet, aileron, élevon ou spoiler d'aéronef, dont le premier revêtement (1) est une peau d'intrados, et le second revêtement (8) est une peau continue d'extrados.

9. Panneau selon l'une quelconque des revendications 1 à 8, **caractérisé en ce qu'**il est plan ou bombé, et le ou les revêtement (s) (1, 8) et les raidisseurs (2, 3, 4, 5, 6) sont réalisés en matériaux composites en une résine rigidifiable, thermodurcissable, thermoplastique ou thermostable, telle qu'une résine époxyde, renforcée d'une armature de fibres, organiques ou inorganiques, en particulier minérales, telles que de carbone, par mise en oeuvre de l'un quelconque des procédés connus à cet effet.

## Patentansprüche

1. Selbstversteifende monolithische Verbundplatte, dazu bestimmt, sich um eine zu einer Seite der Platte parallelen Drehachse (XX) zu drehen, insbesondere für einen beweglichen Abschnitt eines Luftfahrzeugs, eine erste, durchgehende Verbundstoffbeschichtung umfassend, auf der ein struktureller Hauptrahmen (2, 3, 4, 5, 6) angebracht wird, der mit der ersten Beschichtung (1) und steifen Verbindungselementen (15) zur Drehachse (XX) fest verbunden ist, **dadurch gekennzeichnet, dass** der strukturelle Hauptrahmen ein Geflecht von Verbundstoff-Versteifern (2, 3) mit mindestens einem kreuzweise angeordneten Versteiferpaar (2, 3) umfasst, die jeweils in einer der zwei Richtungen angeordnet sind, die zur Drehachse (XX) weder parallel noch senkrecht sind, wobei die beiden Abschnitte (3a, 3b) jedes Versteifers, die sich auf beiden Seiten des Knoten in der Mitte des Kreuzes erstrecken, zusammen eine strukturelle Kontinuität bilden, und wobei die beiden Versteifer jeweils ein Ende aufweisen, das sich auf einem Punkt (A, B, C) auf der zur Drehachse (XX) parallelen Seite der Platte befindet, und wo dieses Ende mit einem steifen Verbindungselement (15) zur Drehachse (XX) fest verbunden ist, wobei das gegenüberliegende Ende von mindestens einem der Versteifer (2,3) an einem Auflagepunkt (E, D) auf einer entgegengesetzten Seite der Platte drehsicher angeordnet ist, und dass sie periphere Verbundstoff-Versteifer (4,5) umfasst, die entlang der Plattenränder angeordnet und mit der ersten Beschichtung (1) und kreuzförmigen Versteiferenden (2,3) fest verbunden sind.

2. Platte nach Anspruch 1, **dadurch gekennzeichnet, dass** sie mindestens einen transversalen Verbundstoff-Versteifer (6) umfasst, der mit der ersten Beschichtung (1) verbunden und zwischen zwei Versteiferkreuzen (2, 3) angeordnet ist, wobei beide Enden des transversalen Versteifers (6) mit Enden von zwei Versteifern (2, 3) verbunden sind, die jeweils zu einem von zwei anliegenden Kreuzen gehören, zum einen auf der zur Drehachse (X,X) parallelen Seite der Platte, und zum anderen auf einer gegenüberliegenden Seite.

3. Platte nach einem der Ansprüche 1 und 2, **dadurch gekennzeichnet, dass** sie zudem eine zweite Verbundstoff-Beschichtung (8) umfasst, die auf die Versteifer (2, 3, 4, 5, 6) aufgetragen und derart fest mit diesen verbunden ist, dass die Versteifer zwischen den zwei Beschichtungen (1, 8) eingeschlossen sind.

4. Platte nach einem der Ansprüche 1 bis 3, **dadurch gekennzeichnet, dass** die strukturelle Kontinuität der Versteifer (2, 3) in mindestens einer Knotenzone, in der Mitte von mindestens einem Kreuz und/oder an mindestens einer Verbindung mit peripheren (4, 5) und/oder gegebenenfalls transversalen Versteifern durch mindestens eine örtliche Verstärkung in der Art eines Zwickels oder einer Lasche aus Verbundstoff oder aus Metall gewährleistet ist, die auf die Knotenzone gedrückt und mit ihr verbunden wird.

5. Platte nach einem der Ansprüche 1 bis 4, **dadurch gekennzeichnet, dass** Haltebeschläge (15) der Platte auf einer umgebenden Struktur im Bereich von Gelenkpunkten (A, B, C), wie insbesondere ein Türanschlag oder ein Riegel (D oder E) auf der Platte durch Befestigungen (19) wie Nieten oder Bolzen befestigt sind, die gegebenenfalls durch Öffnungen (11) in der zweiten Beschichtung (8) zugänglich sind, wenn diese durchbrochen ist.

6. Platte nach einem der Ansprüche 1 bis 5, **dadurch gekennzeichnet, dass** die Versteifer (2, 3) einen offenen Querschnitt haben und vorzugsweise unter den Versteifern mit einem T-, I-, C-, Z- oder U-förmigen Profil ausgesucht werden.

7. Platte nach einem der Ansprüche 1 bis 6, **dadurch gekennzeichnet, dass** sie eine Klappe bildet, insbesondere eine Klappe eines Flugzeugfahrwerks, deren erste Beschichtung (1) eine externe Haut und deren zweite Beschichtung (8) eine interne und durchbrochene (11) Haut ist.

8. Platte nach einem der Ansprüche 1 bis 6, **dadurch gekennzeichnet, dass** sie eine Landeklappe, ein Querruder, ein Höhenruder oder einen Spoiler eines Flugzeugs bildet, deren erste Beschichtung (1) eine Haut an der inneren Wölbfläche und die zweite Beschichtung (8) eine durchgehende Haut an der äußeren Wölbfläche ist.

9. Platte nach einem der Ansprüche 1 bis 8, **dadurch gekennzeichnet, dass** sie eben oder gewölbt ist, und die Beschichtung(en) (1, 8) und Versteifer (2, 3, 4, 5, 6) aus Verbundstoffen hergestellt sind, wie aus einem versteifbaren Kunststoffharz, einem Duroplast, Thermoplast oder einem thermostabilen Kunststoff wie ein Epoxidharz mit organischer oder anorganischer Faserrahmenverstärkung, insbesondere eine mineralische Faserrahmenverstärkung wie Carbon durch Anwendung eines beliebigen dazu bekannten Verfahrens.

## Claims

1. A single-piece self-stiffened composite panel intended to pivot around an axis of rotation (XX) parallel to one side of the panel, particularly for a mobile aircraft part, comprising a first composite facing that is continuous, on which is arranged a main structural reinforcement (2, 3, 4, 5, 6) integral with the first facing (1) and rigid components (15) for joining to the axis of rotation (XX) **characterized in that** the main reinforcement comprises a lattice of composite stiffeners (2, 3) comprising at least one pair of stiffeners (2, 3) forming a cross and each directed in one of two directions respectively, which are neither parallel nor perpendicular to said axis of rotation (XX), wherein the two parts (3a, 3b) of each stiffener that extend on each side of the node at the center of said cross are in structural continuity with each other, wherein the two stiffeners each have an end located at one point (A, B, C) on said side of the panel that is parallel to the axis of rotation (XX) and wherein said end is integral with a rigid component (15) for joining to the axis of rotation (XX), wherein the opposite end of at least one of the stiffeners (2, 3) is stopped from rotating on a support point (E, D) on an opposite side of the panel, and **in that** it comprises composite perimeter stiffeners (4, 5) installed along the edges of the panel and integral with the first facing (1) and the ends of stiffeners forming a cross (2, 3).

2. A panel according to claim 1, **characterized in that** it comprises at least one transverse composite stiffener (6), integral with the first facing (1), and placed between two stiffener crosses (2, 3), wherein each of the two ends of the transverse stiffener (6) is integral with the ends of two stiffeners (2, 3), each belonging to one of two neighboring crosses respectively, firstly on said side of the panel that is parallel to the axis of rotation (X, X), and secondly on the opposite side.

3. A panel according to any of claims 1 to 2, **characterized in that** it further comprises a second composite facing (8) added to the stiffeners (2, 3, 4, 5, 6) and integral with them, so that the stiffeners are caught between the two facings (1, 8).

4. A panel according to any of claims 1 to 3, **characterized in that** the structural continuity of the stiffeners (2, 3) in at least one node area, at the center of at least one cross and/or on at least one joint with perimeter stiffeners (4, 5) and/or transverse stiffeners where applicable, is provided by at least one local reinforcement, such as a bracket or splice plate made of composite material or metal, placed on and made integral with said node area.

5. A panel according to any of claims 1 to 4, **characterized in that** the fittings (15) that hold the panel on a surrounding structure at the articulation points (A, B, C), door stop or lock (D or E) in particular, are squeezed on the panel by fasteners (19) such as rivets or bolts, access to which is allowed through openings (11) in the second facing (8) where applicable, if the latter has cut-outs.

6. A panel according to any of claims 1 to 5, **characterized in that** the stiffeners (2, 3) are of the open-section type and are preferably selected from stiffeners with sections with a T, I, C, Z or U profile.

7. A panel according to any of claims 1 to 6, **characterized in that** it constitutes a door, particularly for aircraft landing gear, the first facing (1) of which is an external skin and the second facing (8) is an internal skin with cut-outs (11).

8. A panel according to any of claims 1 to 6, **characterized in that** it constitutes an aircraft flap, aileron, elevon or spoiler, the first facing (1) of which is a lower surface skin and the second facing (8) is a continuous upper surface skin.

9. A panel according to any of claim 1 to 8, **characterized in that** it is flat or convex, and the facing or facings (1, 8) and the stiffeners (2, 3, 4, 5, 6) are made of composite materials in thermostable, thermoplastic and thermosetting resin that can be made rigid, such as epoxide resin, reinforced by organic or inorganic fibers, particularly mineral fibers such as carbon fibers, through the use of any methods known for this purpose.
